# EUROPÄISCHE PATENTANMELDUNG

(11) **EP 0 940 283 A2**
(43) Veröffentlichungstag der Anmeldung: **08.09.1999**
(21) Anmeldenummer: 99102361.5
(22) Anmeldetag: 06.02.1999
(51) Int. Cl.: B60J 7/12

(54) **Verfahren zum Steuern eines Faltdaches und einer Faltdachabdeckung mit einer überlagerten Bewegung**

(30) Priorität: 04.03.1998 DE 19809063
(71) Anmelder: Dr.Ing. h.c.F. Porsche Aktiengesellschaft, 70435 Stuttgart (DE)
(72) Erfinder: Ritter, Bernhard, 75181 Pforzheim (DE); Dahmen, Hans-Dieter, 75242 Neuhausen (DE)

(57) **Zusammenfassung**

Die Erfindung betrifft ein Verfahren zum Steuern eines zu öffnenden Daches eines Fahrzeuges, wobei das Dach fremdkraftbetätigt zu öffnen und zu schließen und das Dach in einem durch einen Deckel verschließbaren Verdeckkasten ablegbar ist. Um ein Verfahren zur Steuerung eines Faltdaches zu schaffen, mit dem die zum Schließen und Öffnen des Faltdaches benötigte Zeit verkürzt ist, wird vorgeschlagen, zumindest den Deckel gleichzeitig zum Dach zu bewegen.

## Beschreibung

Die Erfindung betrifft ein Verfahren zum Steuern eines zu öffnenden Daches eines Fahrzeuges, wobei das Dach fremdkraftbetätigt zu öffnen und zu schließen und das Dach in einem Verdeckkasten ablegbar ist, der durch einen fremdkraftbetätigten Deckel verschließbar ist.

Aus der DE-Z "ATZ 91(1989)", S. 314 ist es zum Steuern eines zu öffnenden Daches eines Fahrzeuges bekannt geworden, zur Steuerung des Faltdaches sowie eines Deckels für einen Verdeckkasten, in dem das Faltdach ablegbar ist, einen sequentiellen Ablauf vorzusehen. Dies bedeutet, daß alle Bewegungsabläufe nacheinander durchgeführt werden. Durch die sequentielle Steuerung werden Kollisionen von Verdeckteilen sicher vermieden. Es ist gegenüber diesem Stand der Technik Aufgabe der Erfindung, ein Verfahren zur Steuerung eines Faltdaches zu schaffen, mit dem die zum Schließen und Öffnen des Faltdaches benötigte Zeit verkürzt ist, ohne daß hiermit die Gefahr einer Kollision von Verdeckteilen einhergeht.

Diese Aufgabe wird mit den Merkmalen des Patentanspruches 1 gelöst. Erfindungsgemäß wird vorgeschlagen, zumindest den Deckel gleichzeitig zum Dach zu bewegen. Durch eine derart überlagerte Bewegung kann die zum Öffnen oder Schließen des Daches benötigte Zeit merklich verkürzt werden, da der Ablauf der Bewegung des Daches nun nicht mehr von der Bewegung des Deckels abhängt, sondern der Deckel vielmehr stets eine für die ungehinderte Bewegung des Daches notwendige Position einnimmt.

Vorteilhafte Weiterbildungen der Erfindung sind in den Unteransprüche beschrieben.

So wird vor einer Öffnungsbewegung des Daches vorgeschlagen, zunächst eine Verschlußeinrichtung zur lösbaren Verbindung des Daches mit einem Windschutzscheibenrahmen des Fahrzeuges und eine Verschlußeinrichtung zum Verriegeln des Deckels auf dem Vereckkasten zu entriegeln. Anschließend werden das Dach und der Deckel gleichzeitig geöffnet. Beide Öffnungsbewegungen werden vollständig durchgeführt. Nach abgeschlossener Öffnungsbewegung des Daches folgt eine Schließbewegung des Deckels.

Der Ablauf zum Schließen des Daches beginnt hingegen mit dem Entriegeln der Verschlußeinrichtung des Deckels und einer vollständigen Öffnungsbewegung des Deckels. Nach Abschluß der Öffnungsbewegung des Deckels wird eine Schließbewegung des Daches eingeleitet. Noch während der Schließbewegung des Daches wird eine Schließbewegung des Deckels eingeleitet, sobald sich das Dach in einer vorgegebenen Position befindet. Sobald die Schließbewegungen abgeschlossen sind, wird zunächst die Verschlußeinrichtung des Daches und daraufhin die Verschlußeinrichtung des Deckels verriegelt. Die Verriegelungsbewegungen können insbesondere dann nicht gleichzeitig erfolgen, wenn die Schließbedingungen des Deckels gleichzeitig zum endgültigen Spannen des Daches dient, da für ein endgültiges Spannen des Daches dieses am Windschutzscheibenrahmen festgelegt sein muß.

Allgemein ausgedrückt geht die Erfindung von der Idee aus, daß sich die Bewegung des Daches und die Bewegung des Deckels in etwa in dem Punkt der Bewegungsabläufe treffen, in dem das Dach den Windschutzscheibenrahmen erreicht. Für die Öffnungsbewegung bedeutet dies, daß die Öffnungsbewegung des Deckels und die Öffnungsbewegung des Daches im wesentlichen gleichzeitig gestartet werden. Für eine Schließbewegung des Daches bedeutet dies, daß die Bewegungsabläufe von Dach und Deckel so aufeinander abgestimmt sind, daß das Dach und der Deckel im wesentlichen gleichzeitig ihre geschlossene Position erreichen. Besonders hinsichtlich der Schließbewegung kann so ein Verriegeln des Daches und des Deckels zeitnah erfolgen. Da während des gesamten Bewegungsvorganges ein Schalter vom Fahrer betätigt sein muß, und der Fahrer diesen Schalter in der Regel dann löst, wenn die Verschlußeinrichtung des Daches mit dem Windschutzscheibenrahmen hörbar verriegelt, ist hiermit ist der besondere Vorteil verbunden, daß wegen der zeitnahen Folge die Betätigungsdauer des Schalters über das Verriegeln der Verschlußeinrichtung des Daches hinaus weit genug reicht, um auch den Deckle sicher zu verriegeln.

Zur Bestimmung der vorgegebenen Position des Daches, in der bei einem Schließvorgang des Daches eine Schließbewegung des Deckels 4 beginnt, kann vorzugsweise dadurch erfolgen, daß in einem Lernmodus die Steuereinrichtung bei einem Ablauf zum Öffnen des Daches die Position des Daches in dem Augenblick, in dem Deckels vollständig geöffnet ist, erfaßt und als vorgegebene Position speichert.

Die Erfindung ist nachstehend anhand des in den Figuren dargestellten Ausführungsbeispieles näher erläutert. Es zeigen:
- Fig. 1: Eine Prinzipskizze eines Fahrzeuges mit einem zu öffnenden Dach und einem durch einen Deckel verschließbaren Verdeckkasten, in dem das Dach ablegbar ist,
- Fig. 2 bis 5: eine Darstellung eines Öffnungsvorganges des Daches,
- Fig. 6: ein Ablaufdiagramm für einen Öffnungsvorgang und
- Fig. 7: ein Ablaufdiagramm für einen Schließvorgang des Daches.

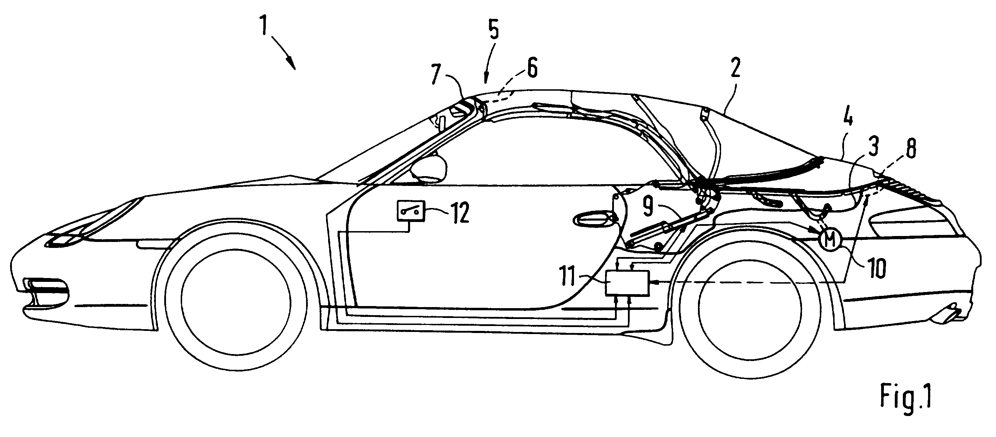

Das in Fig. 1 dargestellte Fahrzeug 1 weist ein Dach 2 auf, welches aus dem dargestellten geschlossenen Zustand heraus geöffnet und in einem Verdeckkasten 3 ablegbar ist. Der Verdeckkasten 3 ist mit einem Deckel 4 verschließbar. Ein vorderes Ende 5 des Daches 2 ist durch eine Verschlußeinrichtung 6 an einem Windschutzscheibenrahmen 7 des Fahrzeuges 1 lösbar befestigt. Der Deckel 7 ist durch eine zweite Verschlußeinrichtung 8 am Verdeckkasten 3 lösbar befestigt. Ferner sind Antriebseinrichtungen 9 und 10 vorgesehen, wobei die erste Antriebseinrichtung 9 zum Antrieb des Deckels 4 und die zweite Antriebseinrichtung 10 zum Antrieb des Daches 2 dient. Beide Antriebseinrichtungen 9, 10 sind, wie im übrigen auch die Verschlußeinrichtungen 6 und 8, unabhängig voneinander durch ein Steuergerät 11 ansteuerbar. Das Steuergerät 11 wird durch einen im Innenraum des Fahrzeuges vorgesehenen Schalter 12 aktiviert, mit dem ein nicht gezeigter Fahrer des Fahrzeuges 1 das Öffnen und Schließen des Daches 2 willkürlich auslösen kann.

Neben dem Signal des Schalters 12 erhält das Steuergerät 11 von Sensoren, die an den Antriebseinrichtungen 9 und 10 angeordnet sind, Signale über die Position des Daches 2 und des Deckels 4. Ferner liefern die Verschlußeinrichtungen 6 und 8 Signale über ihren Verschlußzustand; die Verschlußeinrichtung 6 liefert zusätzlich ein Signal, das anzeigt, ob sich das vordere Ende 5 innerhalb eines Abstandes zum Dachrahmen 7 befindet, der es erlaubt, daß die Verschlußeinrichtung 6 das vordere Ende 5 des Daches 2 ergreift.

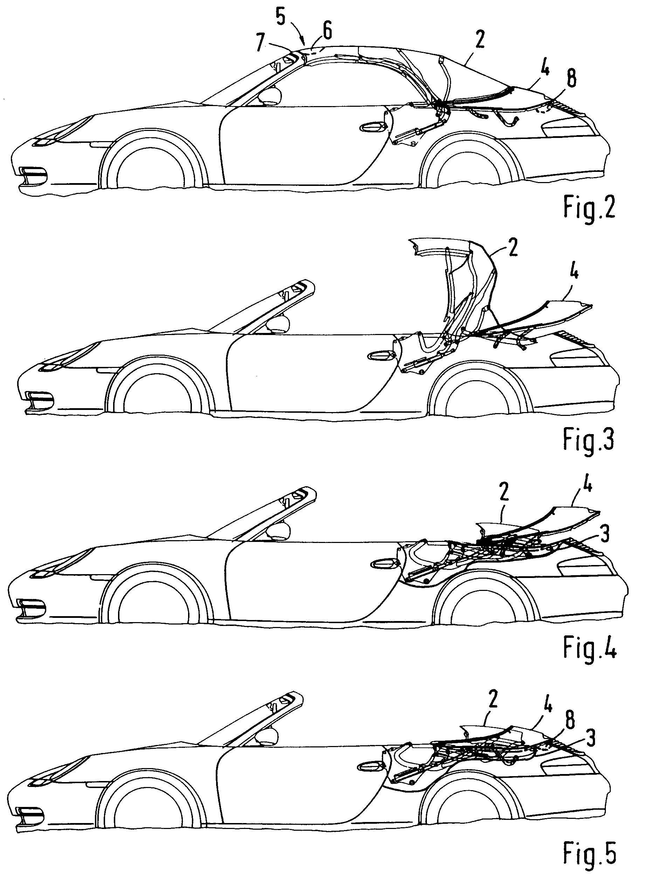

Die Fig. 2 bis 5 zeigen den Bewegungsablauf des Daches 2 und des Deckels 4. Gegenüber der in Fig. 1 dargestellten geschlossenen Position des Daches 2 sind in der Stellung nach Fig. 2 bereits die Verschlußeinrichtungen 6 und 8 gelöst, und das vordere Ende 5 des Daches 2 ist durch die Vorspannung des Daches 2 bereits vom Windschutzscheibenrahmen 7 abgehoben. In geschlossenem Zustand des Daches 2 befindet sich dieses unter Vorspannung und ist hierzu zwischen den Verschlußeinrichtungen 6 und 8 gespannt. Die Reihenfolge des Lösens der Verschlußeinrichtungen 6 und 8 können grundsätzlich frei gewählt werden; zum Abheben des vorderen Endes 5 ist es jedoch von Vorteil, wenn zunächst die erste Verschlußeinrichtung 6 gelöst und damit das vordere Ende 5 vom Windschutzscheibenrahmen 7 abgehoben wird.

Nach dem Lösen der Verschlußeinrichtungen 6 und 8 steuert die Steuereinrichtung 11 die Antriebseinrichtungen 9 und 10 gleichzeitg an, so daß das Dach 2 und der Deckel 4 gleichzeitig eine Öffnungsbewegung beginnen. In Stellung nach Fig. 3 ist der Deckel 4 vollständig geöffnet, während sich das Dach 2 noch in seiner Öffnungsbewegung befindet. Im weiteren bleibt der Deckel 4 vollständig geöffnet, bis in der in Fig. 4 gezeigten Stellung das Dach 2 seine vollständig geöffnete Position erreicht hat und im Verdeckkasten 3 abgelegt ist. Nun steuert die Steuereinrichtung 11 die erste Antriebseinrichtung 9 im Sinne eines Schließens des Deckels 4 an und aktikviert anschließend die zweite Verschlußeinrichtung 8, so daß schließlich mit der in Fig. 5 gezeigten Stellung das Dach 2 vollständig innerhalb des Verdeckkastens 3 abgelegt, der Deckel 4 geschlossen und die zweite Verschlußeinrichtung 8 verriegelt ist. Fig. 5 zeigt somit das Fahrzeug 1 nach dem Abschluß aller Bewegungsabläufe zum Öffnen des Daches 2.

Der Bewegungsablauf zum Schließen des Daches 2 verläuft im wesentlichen umgekehrt zu dem zuvor dargestellten Öffnungsablauf. Zunächst wird die zweite Verschlußeinrichtung 8 entriegelt und der Deckel 4 vollständig geöffnet, bevor die Schließbewegung des Daches 2 begonnen wird. Wesentlich ist, daß in der in Fig. 3 dargestellten Position des Daches 2, die das Steuergerät 11 über den an der zweiten Antriebseinrichtung 10 angebrachten Geber erkennt, die Schließbewegung des Deckels 4 eingeleitet wird, so daß das Dach 2 und der Deckel 4 im wesentlichen gleichzeitig ihre in Fig. 2 dargestellte geschlossene Position erreichen, in der zum Abschluß des Bewegungsablaufes nur noch die Verschlußeinrichtungen 6 und 8 betätigt werden müssen. Diese werden nun nacheinander betätigt: Zunächst wird die erste Verschlußeinrichtung 6 aktiviert und somit das vordere Ende 5 des Daches 2 über den Windschutzscheibenrahmen 7 verbunden, bevor durch die Aktivierung der zweiten Verschlußeinrichtung 8 der Deckel 4 mit dem Verschlußkasten 3 verbunden und durch diese Bewegung gleichzeitig das Dach 2 vorgespannt wird.

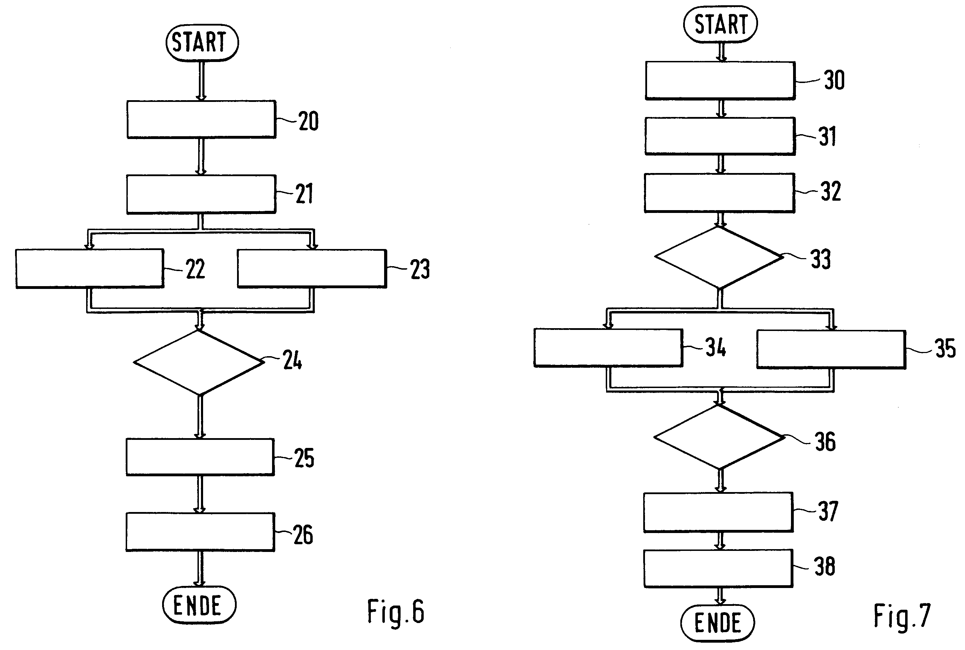

Fig. 6 zeigt ein Ablaufdiagramm des Ablaufes zum Öffnen des Daches 2. In einem ersten Schritt 20 wird die Verschlußeinrichtung 6, im darauffolgenden Schritt 21 die Verschlußeinrichtung 8 geöffnet. Der Ablauf wird jeweils nur dann fortgesetzt, wenn die jeweilige Verschlußeinrichtung 6, 8 ihre Endposition erreicht hat; dies gilt auch für die weiteren Betätigungen der Verschlußeinrichtungen 6, 8. Anschließend werden gleichzeitig der Schritt 22, die Öffnungsbewegung des Deckels 4, und der Schritt 23 die Öffnungsbewegung des Daches 2 ausgelöst. In Schritt 24 wird abgewartet, bis das Dach 2 vollständig geschlossen ist. Mit Schritt 25 wird als Schließbewegung des Deckels 2 ausgelöst und vollständig durchgeführt, bevor in Schritt 26 die Verschlußeinrichtung 8 aktiviert und damit der Deckel 4 mit dem Verschlußkasten 3 verbunden wird. Mit Schritt 26 ist der Ablauf zum Öffnen des Daches 2 abgeschlossen.

In Fig. 7 ist in Form eines Ablaufdiagrammes der Ablauf zum Schließen des Daches 2 dargestellt. In Schritt 30 wird zunächst die Verschlußeinrichtung 6 entriegelt und anschließend in Schritt 31 der Deckel vollständig geöffnet. Nach dem vollständigen Öffnen des Deckels wird in Schritt 32 die Schließbewegung des Daches 2 ausgelöst. In Schritt 33 wird geprüft, ob das Dach 2 seine vorgegebene Position (vgl. Fig. 3) erreicht hat. Ist dies der Fall, so wird in Schritt 34 die Schließbewegung des Deckels 4 ausgelöst und gleichzeitig mit Schritt 35 die Schließbewegung des Daches 2 fortgesetzt (tatsächlich erfolgt zwischen Schritt 32 und Schritt 35 keine Unterbrechung der Schließbewegung des Daches 2, sondern auf die Abfrage in Schritt 33 hin wird die Schließbewegung des Deckels 4 mit Schritt 34 zusätzlich eingeleitet). In Schritt 36 erfolgt eine Prüfung, ob das Dach 2 und der Deckel 4 vollständig geschlossen sind, bevor in Schritt 37 zunächst die Verschlußeinrichtung 6 und nachfolgend in Schritt 38 die Verschlußeinrichtung 8 betätigt werden. Mit Schritt 38 ist der Ablauf zum Schließen des Daches 2 abgeschlossen.

Die Bestimmung der Position des Daches 2 nach Fig. 3, in der eine Schließbewegung des Deckels 4 gleichzeitig mit einer Schließbewegung des Daches 2 endet, kann beispielsweise dadurch erfolgen, daß in einem Lernmodus die Steuereinrichtung 11 bei einem Ablauf zum Öffnen des Daches 2 die von dem Geber an der Antriebseinrichtung 10 gelieferte Position des Daches 2 in dem Augenblick erfaßt, in dem der an der ersten Antriebseinrichtung 9 angeordnete Geber die vollständige Öffnung des Deckels 4 anzeigt. Das Steuergerät 11 speichert diese Position und verwendet sie nachfolgend bei einem Schließen des Daches 2 in Schritt 33 nach Fig. 7.

## Patentansprüche

1. Verfahren zum Steuern eines zu öffnenden Daches (2) eines Fahrzeuges (1), wobei das Dach fremdkraftbetätigt zu öffen und zu schließen und das Dach in einem durch einen fremdkraftbetätigten Deckel (4) verschließbaren Verdeckkasten (3) ablegbar ist, **dadurch gekennzeichnet**, daß bei einer Betätigung des Daches (2) gleichzeitig zur Bewegung des Daches eine Bewegung des Deckels (4) erfolgt.

2. Verfahren nach Anspruch 1, **gekennzeichnet durch** folgende Schritte beim Öffnen des Daches (2):
- Entriegeln einer Verschlußeinrichtung (6) zur lösbaren Verbindung des Daches mit einem Windschutzscheibenrahmen (7),
- Entriegeln des Deckels (4), wenn die Verschlußeinrichtung gelöst ist,
- Öffnen des Deckels und gleichzeitiges Öffnen des Daches, wenn der Deckel entriegelt ist, und
- Schließen des Deckels, wenn sich das Dach in seiner vollständig geöffneten Position befindet.

3. Verfahren nach Anspruch 1, **gekennzeichnet durch** folgende Schritte beim Schließen des Daches (2):
- Entriegeln und Öffnen des Deckels (4),
- Auslösen einer Schließbewegung des Daches, wenn der Deckel offen ist,
- Schließen des Deckels, wenn sich das Dach in einer vorgegebenen Position befindet,
- Verriegeln einer Verschlußeinrichtung (6) zur lösbaren Verbindung des Daches mit einem Windschutzscheibenrahmen (7), und
- Verriegeln des Deckels.

4. Verfahren nach Anpruch 3, **dadurch gekennzeichnet**, daß die vorgegebene Position des Daches (2) so bestimmt ist, daß das Dach und der Deckel (4) im wesentlichen gleichzeitig ihre geschlossene Position erreichen.

5. Verfahren nach Anpruch 4, **dadurch gekennzeichnet**, daß die vorgegebene Position des Daches (2) bestimmt wird, indem das Dach und der Deckel (4) im wesentlichen gleichzeitig ihren Öffnungsvorgang beginnen und die aktuelle Position des Daches als vorgegebene Position gespeichert wird, wenn der Deckel seine vollständig geöffnete Position erreicht.
